# EUROPEAN PATENT SPECIFICATION

(11) **EP 1 383 183 B1**
(45) Date of publication and mention of the grant of the patent: **23.07.2014**
(21) Application number: 02744912.3
(22) Date of filing: 15.02.2002
(51) Int. Cl.: H01M 4/131, H01M 4/02, H01M 4/62, H01M 4/58, H01M 10/052, H01M 4/36, H01M 4/505, H01M 4/525

(54) **SECONDARY CELL**
SEKUNDÄRZELLE
PILE SECONDAIRE

(30) Priority: 27.02.2001 JP 2001052289
(43) Date of publication of application: 21.01.2004
(73) Proprietor: NEC Corporation, Minato-ku Tokyo 108-8001 (JP)
(72) Inventor: WATANABE, Mikio, c/o NEC Corporation, Tokyo 108-8001 (JP); NUMATA, Tatsuji, c/o NEC Corporation, Tokyo 108-8001 (JP); KUMEUCHI, Tomokazu, c/o NEC Corporation, Tokyo 108-8001 (JP)
(74) Representative: Stork Bamberger
(86) International application number: PCT/JP2002/001329
(87) International publication number: WO 2002/069417

(56) References cited:
- EP-A- 0 885 845
- JP-A- 5 013 107
- JP-A- 7 153 495
- JP-A- 8 045 498
- JP-A- 8 279 357
- JP-A- 10 106 541
- JP-A- 10 125 327
- JP-A- 10 241 670
- JP-A- 10 302 767
- JP-A- 11 016 566
- JP-A- 11 071 115
- JP-A- 11 297 362

## Description

### Technical field

The present invention relates to a secondary battery and, more particularly, to a secondary battery suitably used as a secondary battery using a non-aqueous electrolyte, such as a lithium secondary battery or lithium-ion secondary battery, capable of increasing the capacity thereof, and superior in the safety and operating characteristics, especially in a higher-temperature cycle characteristic.

### Background technology

In a conventional non-aqueous-electrolyte secondary battery using lithium metal or a lithium compound as anode, an electromotive force exceeding 4 volts can be achieved if lithium cobaltate, lithium nickelate or spinel lithium manganate is used as a cathode active material. Thus, extensive studies are conducted for non-aqueous secondary batteries. Among others, lithium cobaltate is superior in the battery characteristic, can be synthesized with ease, and thus is widely used as the cathode active material for a lithium-ion secondary battery.

However, since cobalt is small in the amount of minable deposits and thus expensive, use of lithium nickelate is highly expected as an alternative thereof. The lithium nickelate has a layered rock salt structure (α-NaFeO₂ structure) similarly to the lithium cobaltate, exhibits a potential of about 4 volts with respect to the lithium electrode, and has a capacity of about 200mAh/g in terms of lithium in the range below 4.2 volts, exhibiting a well higher capacity compared to lithium cobaltate and thus now attracting attention.

It is noted that, in the layered rock salt structure, desorption of lithium during battery charge causes the oxygen phase having a large electronegative property to reside adjacent to the layered rock salt structure, whereby an irreversible structural change into CdCl₂ occurs if the electrostatic repulsive force acting between the oxygen layers exceeds the chemical bonding force. Such a structural instability during the battery charge also correlates with the chemical instability of Ni⁴⁺ generated by the battery charge, thereby affecting the starting temperature of the oxygen desorption from the crystal lattice.

It is reported that lithium nickelate in the charged state has a lower starting temperature of oxygen desorption, even compared to lithium cobaltate (refer to Solid State Ionics, 69, No3/4. 265 (1994)).

Accordingly, although the battery family having lithium nickelate as a single cathode active material is expected to have a higher capacity, it is difficult to use the battery family in practical application because a sufficient safety is not assured due to the thermal instability thereof during the battery charge.

In addition, it is also reported that the cycle characteristic, especially the cycle characteristic under a higher temperature, is not satisfactory in this battery family due to the enhanced proceeding in the reaction of decomposition of the electrolyte (refer to J. Electrochem. Soc. 147 p.1322 to 1331 (2000)).

On the other hand, it is known that spinel lithium manganate has a crystal structure belonging to spatial group Fd3m, wherein the patterns laminated in the direction of the (111)crystal axis do not include the single phase of lithium, differently from lithium cobaltate and lithium nickelate. Accordingly, even if lithium is entirely extracted therefrom, the oxygen layer does not reside directly adjacent thereto because manganese ions act as pillars. Thus, lithium ions can be extracted while maintaining the basic structure of the cubic system.

In addition, the spinel lithium manganate has a higher starting temperature of oxygen desorption during the battery charge compared to the lithium nickelate and lithium cobaltate having a layered rock salt structure. Thus, it is understood from this view point that the spinel lithium manganate is a cathode active material having a higher safety.

However, there is a problem in that the battery family using spinel lithium manganate has lower charge and discharge capacities compared to those using lithium cobaltate and lithium nickelate.

In addition, since Mn dissolves within the electrolyte at high temperatures, it is pointed out that the high-temperature cycle characteristic is not satisfactory.

In view of the above, a non-aqueous-electrolyte secondary battery is proposed for obtaining a higher capacity and an improved safety, by using a mixture of spinel lithium manganate and lithium nickelate as cathode active material (refer to JP-A-2000-77072).

This non-aqueous-electrolyte secondary battery has a higher capacity compared to the lithium cobaltate and assures a higher safety.

It is to be noted that although the non-aqueous-electrolyte secondary battery has the advantages of higher capacity and higher safety over the conventional secondary battery, this secondary battery has an insufficient cycle characteristic under high temperature and thus a further improvement is needed.

In the secondary battery using the spinel lithium manganate, a technique is described for improving the battery characteristics under high temperature by adding to the cathode a chalcogen compound including at least one element selected from the element groups consisting of Ge, Sn, Pb, In, Sb, Bi and Zn (refer to JP-A-10-302767). However, this secondary battery uses spinel lithium manganate as a single cathode active material, and there is no study in the point using a mixture of spinel lithium manganate and lithium nickelate as the cathode active material.

In addition, a technique is described for reducing the internal resistance of the battery by adding at least one element selected from B, Bi, Mo, P, Cr, V and W in the secondary battery using lithium manganate or lithium nickelate (refer to JP-A-2000-113884). However, the battery characteristic under high temperature is not described as to this secondary battery.

Although it is possible to obtain a secondary battery having a higher capacity and a higher safety compared to the secondary battery using lithium cobaltate, by using a mixture of lithium nickelate and spinel lithium manganate as a cathode active material, as described in the publication, this secondary battery has an insufficient cycle characteristic under high temperature and it is desired to improve the high-temperature cycle characteristic.

In view of the above circumstances, it is an object of the present invention to provide a non-aqueous-electrolyte secondary battery having a higher capacity and being superior in the safety and in the high-temperature cycle characteristic.

### Disclosure of the Invention

The present invention is directed to a secondary battery using a mixture of lithium manganate and lithium nickelate as a cathode active material, as it is defined in claim 1.

In the secondary battery of the present invention, it is preferable that the lithium manganate be LiₓMn₂O₄ (1.02≦x≦ 1.25) and the lithium nickelate be LiNi₁₋ₓMₓO₂ (wherein M is at least one element selected from Co, Mn, Fe, Al and Sr, and 0< x ≦0.5).

In the secondary battery of the present invention, it is preferable that the weight ratio between the lithium manganate and the lithium nickelate be a:100-a (wherein 40<a≦99).

In the secondary battery of the present invention, the element is added in the form of carbonate, hydroxide or oxide. The carbonate, hydroxide or oxide is included therein in an amount between 0.5% and 10%, inclusive of both, in the weight ratio with respect to the mixture.

According to the secondary battery of the present invention, the at least one element selected from Bi, Pb, Sb and Sn suppresses the adverse affect caused by the decomposed materials or products of the electrolyte onto the opposite active material. As a result, the cycle characteristic of the secondary battery under high temperature can be improved. Thus, a non-aqueous-electrolyte secondary battery having a higher capacity and being superior in the safety and in the high-temperature cycle characteristic can be obtained.

### Brief Description of the drawing

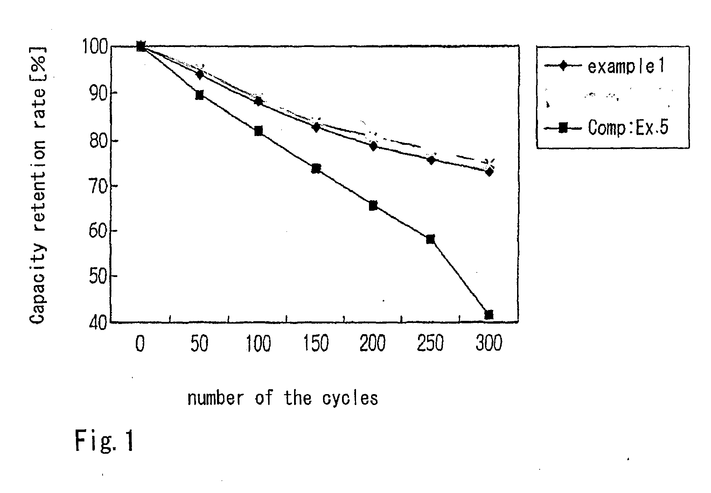

Fig. 1 is a diagram showing the 45-degree cycle characteristics of cylindrical cells in the secondary batteries of an embodiment of the present invention and in a conventional secondary battery, wherein mixtures of lithium manganate and lithium nickelate are used in a cathode.

### Best Modes for Carrying Out the Invention

An embodiment of the secondary battery of the present invention will be described in connection with a non-aqueous-electrolyte secondary battery exemplified.

The non-aqueous-electrolyte secondary battery of the present embodiment includes, as a cathode active material, a mixture of spinel lithium manganate represented by LiₓMn₂O₄ (1.02≦x≦1.25) and lithium nickelate represented by LiNi₁₋ₓMₓ (wherein M is at least one element selected from Co, Mn, Fe, Al and Sr, and 0<x≦0.5), wherein at least one element selected from Bi, Pb, Sb and Sn is added in the cathode electrode in the form of carbonate, hydroxide or oxide.

In this type of the non-aqueous-electrolyte secondary battery in general, since the mixture of spinel lithium manganate and lithium nickelate is used as the cathode active material, the cycle degradation under high temperature is different in the behavior thereof from that in the case that each of them is used as a single cathode active material. Thus, it is considered that the cause of such a cycle degradation results from the interaction between the active materials. For example, the cause may be such that the products generated by the decomposition of the electrolyte on the interface of the lithium nickelate electrode exert adverse affects onto the lithium manganate.

Thus, in the present invention, at least one element selected from Bi, Pb, Sb and Sn is added in the form of carbonate, hydroxide or oxide to this type of secondary battery. This element suppresses the adverse affect caused by decomposed materials or the products of the electrolyte onto the opposite active material.

In the non-aqueous-electrolyte secondary battery of the present invention, as the manganese (Mn) source of the lithium manganese compounds used as the cathode active material, a variety of Mn oxides, such as electrolytic manganese dioxide (EMD), Mn₂O₃, Mn₃O₄ and chemically-synthesized manganese dioxide (CMD), and manganese salt, such as manganese carbonate and manganese oxalate may be used, whereas lithium compounds such as lithium carbonate, Li oxide, lithium nitrate and lithium hydroxide may be used as the lithium (Li) source.

In addition, as for the lithium nickelate, nickel compounds such as nickel hydroxide, nickel oxide and nickel nitrate may be used as the nickel (Ni) source, whereas lithium compounds such as lithium carbonate, lithium nitrate and lithium hydroxide may be used as the lithium (Li) source.

For improved stability, higher capacity or improved safety, some other elements (Co, Mn, Fe, Al and Sr) may be doped for the sources.

The lithium manganate or lithium nickelate mixed in the cathode electrode may preferably have a grain size of 30 µ m or below in considerations of the filling capability thereof into the cathode electrode and prevention of degradation of the electrolyte. In addition, such a material having no absorbed water or structural water, or subjected to thermal dehydration is preferable.

The carbonate, hydroxide or oxide including at least one element of Bi, Pb, Sb and Sn, which is to be added to the cathode electrode, may be added at any stage of preparing a powder and configuring an electrode, and may be added to either one of the lithium manganate and the lithium nickelate to be mixed.

In consideration of the working feasibility, however, such an element should be preferably added in the stage of configuring the electrode together with the conductivity-providing agent, binder and organic solvent. Further, in view of the improvement in the cycle characteristic at 45 degrees C or below, Bi is preferably selected as the additive element because such a material added with Bi is most effective.

As described above, a mixture of lithium manganate and lithium nickelate is used as the cathode active material, whereas lithium, lithium alloy, a graphite capable of inserting and extracting lithium, and a carbon material such as amorphous carbon are preferably used as the anode active materials.

Woven cloth, glass fiber, porous synthesized resin film etc. may be used as the separator, although not limited thereto. For example, a polypropylene- or polyethylene-based porous film is preferable in view of the small film thickness, larger area, film strength and film resistance.

Solvents generally used for the non-aqueous electrolyte may be used, and carbonates, chlorinated hydrocarbons, ethers, ketones and nitriles are preferably used, for example. In particular, at least one solvent is selected from ethylene carbonate (EC), propylene carbonate (PC), γ-butylolactone (GBL) etc. as a high-dielectric-constant solvent and at least one solvent is selected from diethyl carbonate (DEC), dimethyl carbonate (DMC), ethylmethyl carbonate (EMC) and esters as a high-viscosity solvent, and a mixture of them is preferably used.

At least one selected from LiClO₄, LiI, LiPF₆, LiAlCl₄, LiBF₄, CF₃SO₃Li etc. is preferably used as a supporting salt.

The electrolyte and the supporting salt may be selected and prepared in consideration of optimization of the environment for using the battery, application of the battery etc. It is preferable that 0.8- to 1.5-mol. LiClO₄, LiBF₄ or LiPF₆ be used as the supporting salt, and at least one selected from EC+DEC, PC+DMC and PC+EMC be used as the solvent.

As the structure of the non-aqueous-electrolyte secondary battery, a variety of shapes such as cubic type, paper type, laminated type, cylindrical type and coin type may be employed. Constituent parts include collector, insulator plate etc., which are not limited in particular and may be selected as desired depending on the shapes as described above.

The non-aqueous-electrolyte secondary battery of the present embodiment will be described hereinafter in connection with examples and comparative examples. It is to be noted that the present invention is not limited only to these examples.

### [Example 1]

For synthesizing spinel lithium manganate, lithium carbonate (Li₂CO₃) and electrolytic manganese dioxide (EMD) were used as starting source materials, and mixed together at a molar ratio of [Li]/[Mn]=1.05/2. Subsequently, the mixed powder was baked at 800 degrees C in an oxygen-flow ambient.

For the lithium nickelate, nickel nitrate and lithium hydroxide were used as the nickel source and the lithium source, respectively, and a Co compound such as cobalt carbonate was used as an additive element. These materials were mixed at a desired ratio, followed by baking thereof at 750 degrees C in an oxygen-flow ambient. Here, the molar ratio between the source materials was adjusted so that the composition obtained after the baking corresponded to LiNi_{0.8}Co_{0.2}O₂.

Thereafter, lithium manganate, lithium nickelate, conductivity-providing agent and bismuth hydroxide were dry-mixed and uniformly dispersed in N-methyl-2-pyrolydene (NMP) in which PVDF was dissolved as a binder, thereby preparing a slurry.

Subsequently, the slurry was applied onto an aluminum foil having a thickness of 25µm by coating, followed by evaporation of NMP to obtain a cathode sheet.

Here, the weight percentage between solid contents in the cathode was set at lithium manganate: lithium nickelate: conductivity-providing agent: bismuth hydroxide: PVDF = 45: 35: 10: 3: 7 (weight %).

On the other hand, the anode sheet is prepared by mixing carbon and PVDF at a ratio of carbon: PVDF = 90: 10 (weight %), followed by dispersing the mixture in NMP and applying the mixture onto a copper foil by coating after the dispersion.

As for the electrolyte, 1-mol. LiPF₆ was used as a supporting salt, and a mixed liquid including ethylene carbonate (EC) + diethyl carbonate (DEC) = 50+50 (volume %) was used as a solvent.

A polyethylene porous film having a thickness of 25 µm was used as the separator.

### [Comparative Example 1]

Only spinel lithium manganate was used as the cathode active material, and a cylindrical cell was manufactured by way of trial similarly to example 1 except that the ratio between solid contents was set at lithium manganate: conductivity-providing agent: PVDF = 80: 10: 10 (weight %).

### [Comparative Example 2]

Only lithium nickelate was used as the cathode active material, and a cylindrical cell was manufactured by way of trial similarly to example 1 except that ratio between solid contents was set at lithium nickelate: conductivity-providing agent: PVDF = 80: 10: 10 (weight %).

### [Comparative Example 3]

Bi-added spinel lithium manganate prepared similarly to' example 2 was used as the cathode active material. The ratio between solid contents was set at Bi-added spinel lithium manganate: conductivity-providing agent: PVDF = 80: 10: 10 (weight %).

### [Comparative Example 4]

Only lithium nickelate was used as the cathode active material. A cylindrical cell was manufactured by way of trial similarly to example 1 except that the ratio between solid contents was set at lithium nickelate: conductivity-providing agent: bismuth oxide: PVDF = 75: 10: 5: 10 (weight %).

### [Comparative Example 5]

A mixture of spinel lithium manganate and lithium nickelate was used as the cathode active material. A cylindrical cell was manufactured by way of trial similarly to example 1 except that the ratio between solid contents was set at spinel lithium manganate: lithium nickelate: conductivity-providing agent: PVDF = 45: 35: 10: 10 (weight %).

### [Evaluation of characteristics]

Charge and discharge cycle tests were conducted at 45 degrees C while using the cylindrical cells manufactured in examples 1 and 2 and comparative examples 1 to 5.

The charge was conducted at 0.5A up to 4.2 volts, whereas discharge was conducted at 1A down to 3.0 volts. Table 1 tabulates the charge and discharge capacities at an initial cycle.

**Table 1**

| | Initial charge capacity (AH) | Initial discharge capacity (Ah) |
|---|---|---|
| Example 1 | 1.53 | 1.48 |
| Comparative Ex. 1 | 1.30 | 1.27 |
| Comparative Ex. 2 | 1.76 | 1.63 |
| Comparative Ex. 3 | 1.28 | 1.23 |
| Comparative Ex. 4 | 1.70 | 1.59 |
| Comparative Ex. 5 | 1.58 | 1.52 |

Fig. 1 shows the transitions of the capacity retention rates of example 1 and comparative example 5 along with the cycles.

It will be understood from table 1 that both the charge and discharge capacities are larger for the case (comparative example 5), wherein lithium nickelate is admixed, compared to the case (comparative example 1), wherein lithium manganate is used alone.

A larger amount of the lithium nickelate content in the cathode active material increases the battery capacity; however, the amount of admixing of lithium nickelate should be preferably between 1% and 60%, inclusive of both, in the weight ratio with respect to the spinel lithium manganate because of the difficulty in assuring the safety.

Addition of Bi hydroxide or oxide may decrease the battery capacity; however, the amount of addition of Bi should be in the range between 0.5% and 10%, inclusive of both, in the weight ratio with respect to the total of the cathode active material, because a too small amount of addition of Bi is not effective.

Table 2 shows comparison between the cycle characteristics of the cylindrical cells manufactured in example 1 and comparative examples 1 to 5 at 45 degrees C, tabulating the capacity preservation rates after 300 cycles with the initial capacity being represented by 100%.

**Table 2**

| | without Bi addition | with Bi addition |
|---|---|---|
| Lithium manganate alone | 65% (Comparative Ex. 1) | 68% (Comparative Ex. 3) |
| Lithium nickelate alone | 60% (Comparative Ex. 2) | 63% (Comparative Ex. 4) |
| mixture of lithium manganate and lithium nickelate | 42% (Comparative Ex. 5) | 73% (Example 1) |

According to table 2, a large capacity reduction occurs in comparative example 5, which apparently exhibits a different cycle behavior from comparative examples 1 and 2. This is considered due to the interaction occurring between lithium manganate and lithium nickelate under this condition. On the other hand, it was confirmed that the capacity preservation rate was considerably improved in example 1.

In addition, a similar considerable improvement of the cycle characteristic was recognized again in the case of addition of Bi carbonate, Pb, Sb or Sn carbonate, hydroxide and oxide compared to comparative example 5.

Since a too small amount of addition of carbonate, hydroxide and oxide of Bi, Pb, Sb or Sn is not effective whereas a too large amount of addition thereof reduces the battery capacity, the amount of addition should be in the range between 0.5% and 10%, inclusive of both, in the weight ratio with respect to the total of the cathode active material.

According to the present embodiment, since a mixture of spinel lithium manganate and lithium nickelate is used as the cathode active material, and in addition, since carbonate, hydroxide or oxide of Bi, Pb, Sb or Sn is added to the cathode electrode, the adverse affect caused by the decomposed materials or products of the electrolyte onto the opposite active material can be suppressed, whereby the cycle characteristic under high temperature can be improved.

Although the secondary battery according to an embodiment of the present invention is described with reference to an exemplified non-aqueous-electrolyte secondary battery, the practical configurations of the present invention are not limited to those in the present embodiment, and may be modified in design without departing from the gist of the present invention.

## Claims

1. A secondary battery comprising a mixture of lithium manganate and lithium nickelate as a cathode active material, and carbon as an anode active material, said carbon being capable of inserting and extracting lithium, **characterized in that**:
the cathode electrode contains at least one element selected from Bi, Pb, Sb and Sn in a form of carbonate, hydroxide or oxide, wherein said carbonate, hydroxide or oxide is included between 0.5% and 10% inclusive of both, in a weight ratio with respect to said mixture.

2. The secondary battery according to claim 1, wherein said lithium manganate is LiₓMn₂O₄ (1.02≤x≤1.25), and said lithium nickelate is LiNi_{1- x}MₓO₂ (wherein M is at least one element selected from Co, Mn, Fe, Al and Sr, and 0<x≤0.5).

3. The secondary battery according to claim 1 or 2, wherein a weight ratio between said lithium manganate and said lithium nickelate is a:100-a (40<a≤99).

4. The secondary battery according to any one of claims 1 to 3, wherein said element is added in the form of Bi hydroxide or Bi₂O₃.

5. The secondary battery according to claim 4, wherein said Bi hydroxide or Bi₂O₃ is included between 0.5% and 10%, inclusive of both, in a weight ratio with respect to said mixture.

## Patentansprüche

1. Sekundärzelle, umfassend eine Mischung aus Lithiummanganat und Lithiumnickelat als aktives Kathodenmaterial und Kohlenstoff als aktives Anodenmaterial, wobei der Kohlenstoff in der Lage ist, Lithium einzulagern und abzugeben, **dadurch gekennzeichnet, dass**
die Kathodenelektrode mindestens ein Element ausgewählt aus Bi, Pb, Sb und Sn in Form von Carbonat, Hydroxid oder Oxid enthält, wobei das Carbonat, Hydroxid oder Oxid bezogen auf die Mischung in einem Gewichtsverhältnis zwischen einschließlich 0,5 % und einschließlich 10 % enthalten ist.

2. Sekundärzelle nach Anspruch 1, wobei das Lithiummanganat LiₓMn₂O₄ (1,02 ≤ x ≤ 1,25) ist und das Lithiumnickelat LiNi₁₋ₓMₓO₂ ist (wobei M mindestens ein Element ausgewählt aus Co, Mn, Fe, Al und Sr ist und 0 < x ≤ 0,5 ist).

3. Sekundärzelle nach Anspruch 1 oder 2, wobei ein Gewichtsverhältnis zwischen dem Lithiummanganat und dem Lithiumnickelat a:100-a (40 ≤ a ≤ 99) ist.

4. Sekundärzelle nach einem der Ansprüche 1 bis 3, wobei das Element in Form von Bismuthydroxid oder Bi₂O₃ zugefügt wird.

5. Sekundärzelle nach Anspruch 4, wobei das Bismuthydroxid oder Bi₂O₃ bezogen auf die Mischung in einem Gewichtsverhältnis zwischen einschließlich 0,5 % und einschließlich 10 % enthalten ist.

## Revendications

1. Pile secondaire comprenant un mélange de manganate de lithium et de nickelate de lithium en tant que matériau actif de cathode, et du carbone en tant que matériau actif d'anode, ledit carbone étant capable d'insérer et d'extraire du lithium, **caractérisée en ce que**:
l'électrode cathode contient au moins un élément choisi parmi Bi, Pb, Sb et Sn sous une forme de carbonate, d'hydroxyde ou d'oxyde, dans laquelle ledit carbonate, hydroxyde ou oxyde est inclus entre 0,5 % et 10 %, bornes incluses, en rapport pondéral par rapport audit mélange.

2. Pile secondaire selon la revendication 1, dans laquelle ledit manganate de lithium est LiₓMn₂O₄ (1,02≤x≤1,25), et ledit nickelate de lithium est LiNi₁₋ₓMₓO₂ (où M est au moins un élément choisi parmi Co, Mn, Fe, Al et Sr, et 0<x≤0,5).

3. Pile secondaire selon la revendication 1 ou 2, dans laquelle un rapport pondéral entre ledit manganate de lithium et ledit nickelate de lithium est a:100-a (40<a≤99).

4. Pile secondaire selon l'une quelconque des revendications 1 à 3, dans laquelle ledit élément est ajouté sous la forme d'hydroxyde de Bi ou Bi₂O₃.

5. Pile secondaire selon la revendication 4, dans laquelle ledit hydroxyde de Bi ou Bi₂O₃ est inclus entre 0,5 % et 10 %, bornes incluses, en rapport pondéral par rapport audit mélange.
